# EUROPEAN PATENT APPLICATION

(11) **EP 3 367 074 A1**
(43) Date of publication of application: **29.08.2018**
(21) Application number: 18158249.5
(22) Date of filing: 23.02.2018
(51) Int. Cl.: G01F 15/14, G01L 19/06, G01F 1/66

(54) **ELECTRONIC FLOW METER INCLUDING A BUILT-IN PRESSURE SENSOR**

(30) Priority: 23.02.2017 DK 201770135
(71) Applicant: Kamstrup A/S, 8660 Skanderborg (DK)
(72) Inventor: Skallebæk, Anders, 8660 Skanderborg (DK)
(74) Representative: Plougmann Vingtoft a/s

(57) **Abstract**

An electronic flow meter (1) comprising a housing (10) formed by a polymer structure, the housing including a flow tube (11) defined by a first wall (12) and a compartment partly defined by a second circumferential wall (15) forming a compartment opening (16), wherein the first wall separates an inner bore (18) of the flow tube from the compartment; a cover (20) configured for sealed engagement with a rim (17) of second wall surrounding the compartment opening to provide a fluid-tight enclosure; a flow sensor (30) arranged inside the fluid-tight enclosure, configured to measure a flow rate of a fluid flowing through the flow tube, control electronics (40) operationally connected to the flow sensor, and a self-contained power source (50) for powering the control electronics and the flow sensor; and a built-in pressure sensor device (60) operationally connected to the control electronics and mounted in a sensor bore (19) extending between the compartment and the inner bore of the flow tube, wherein the pressure sensor device comprises a sensor housing (61) in the form of a membrane element arranged to seal against the sensor bore to prevent fluid from entering the compartment and wherein a sensing element (62) of the pressure sensor device is arranged in the housing and operationally connected to the control electronics through electrical connections arranged inside the compartment.

## Description

### FIELD OF THE INVENTION

The present invention relates to an electronic flow meter comprising a housing formed by a polymer structure, the housing including a compartment and a flow tube, a cover configured for sealed engagement with a rim of the compartment to provide a fluid-tight enclosure; a flow sensor arranged and configured to measure a flow rate of a fluid flowing through the flow tube, and a built-in pressure sensor device.

### BACKGROUND OF THE INVENTION

Smart metering system for use in water distribution-networks enables an increasing amount of data to be measured, collected and analyzed. In addition to consumption data, other relevant data may be pressure, temperature, noise, etc. By analyzing the data, important insights into the state and operation of the network can be obtained. For example, leaks may be identified by analyzing noise and pressure changes, or pressure may be monitored to be able to reduce pumping power. To be able to gather such data in an efficient and cost effective manner, it is advantageous to integrate sensors having a time of many years in the distribution-network. As sensors should have access to the necessary infrastructure for collecting data, it is advantageous to integrate sensors in smart meters or electronic flow meters already provided with wireless communication equipment. However, integration of sensors in an electronic flow meter may be restricted by space constrains and the risk of interference with flow meter operation. In particular, the electronic flow meter components should be protected from ingress of water from the distribution-network or the surrounding environment.

### OBJECT OF THE INVENTION

An object of the present invention is to provide an alternative to the prior art. In particular, it may be seen as a further object of the present invention to provide a flow meter with a built-in pressure sensor operationally connected to the flow meter control electronics.

### SUMMARY OF THE INVENTION

Thus, the above described object and several other objects are intended to be obtained in a first aspect of the invention by providing an electronic flow meter comprising a housing formed by a polymer structure, the housing including a flow tube defined by a first wall and a compartment partly defined by a second circumferential wall forming a compartment opening, wherein the first wall separates an inner bore of the flow tube from the compartment; a cover configured for sealed engagement with a rim of the second wall surrounding the compartment opening to provide a fluid-tight enclosure; a flow sensor arranged inside the fluid-tight enclosure, configured to measure a flow rate of a fluid flowing through the flow tube, control electronics operationally connected to the flow sensor, and a self-contained power source for powering the control electronics and the flow sensor; and a built-in pressure sensor device arranged in a sensor bore provided in the polymer structure extending from the compartment to the inner bore of the flow tube, wherein the pressure sensor device comprises a sensor housing in the form of a membrane element arranged to seal against the sensor bore to prevent fluid from entering the compartment and wherein a sensing element of the pressure sensor device is arranged in the housing and operationally connected to the control electronics through electrical connections arranged inside the compartment.

Hereby a flow meter with a built-in pressure sensor is achieved. By connecting the flow- and pressure sensor to the same control electronics, measured flow- and pressure data may be correlated to provide more accurate pressure measurements. Further, by the flow- and pressure sensor being arranged in connection with the same compartment a single processor may be used for processing measurement data.

Moreover, the membrane element may be arranged to protect the sensing element from the fluid flowing in the flow tube and at least two sealing rings may be are arranged with a distance apart to provide separate sealing barriers between the membrane element and the polymer structure, and a drain channel communicating with a drain space arranged between the sealing rings may be provided in the polymer structure to drain possible fluid from the flow tube entering the space.

Additionally, the membrane element may be provided with one or more indentations, each configured for receiving a sealing ring. Also, the membrane element may be provided with an indentation in an area between the two sealing rings to provide an enlarged drain space in fluid communication with the drain channel. Alternatively, a drain groove may be provided in the polymer structure to provide an enlarged drain space between the sealing rings in fluid communication with the drain channel.

In one embodiment, the membrane constituting the sensor housing may comprise define a cavity for housing the sensing element and the membrane element may extend into the sensor bore. Furthermore, at least one of the sealing rings may be arranged around the cavity defined by the membrane element to provide a sealing barrier between the membrane element and a side face of the sensor bore.

The membrane element may also be arranged to be fixed between an abutting face of the polymer structure provided outside the sensor bore and a fixation element, and the drain groove may be provided in the abutting face encircling the sensor bore. Further, the sensor housing may be provided with a flange surrounding an opening thereof, and the flange may be arranged to be fixed between the abutting face and the fixation element.

Additionally, the sensor bore may extend through the first wall between the compartment and the inner bore and/or the second walls. Moreover, the flow tube may extends through the compartment.

Furthermore, the drain channel may be provided with a check-valve for controlling the direction of flow through the drain channel. The drain channel may be in fluid communication with the surrounding environment through an outlet provided at an outer face of the polymer structure.

Still further, the flow sensor of the flow meter described above may comprises a measurement circuit including two ultrasonic transducers positioned to transmit ultrasonic signals through the first wall. Also, the control electronics may include a signal transmitter configured to wirelessly transmit data packets including information about the measured flow rate and/or pressure.

Other aspects of the invention will be apparent from and elucidated with reference to the embodiments described hereinafter.

### BRIEF DESCRIPTION OF THE FIGURES

The electronic flow meter according to the invention will now be described in more detail with regard to the accompanying figures. The figures show one way of implementing the present invention and is not to be construed as being limiting to other possible embodiments falling within the scope of the attached claim set.
Figure 1 shows an electronic flow meter comprising a built-in pressure sensor device,
Figures 2-5 show exemplary embodiments of built-in pressure sensor devices, and
Figure 6 shows a housing for an electronic flow meter with a built-in pressure sensor formed by a monolithic polymer structure.

### DETAILED DESCRIPTION OF AN EMBODIMENT

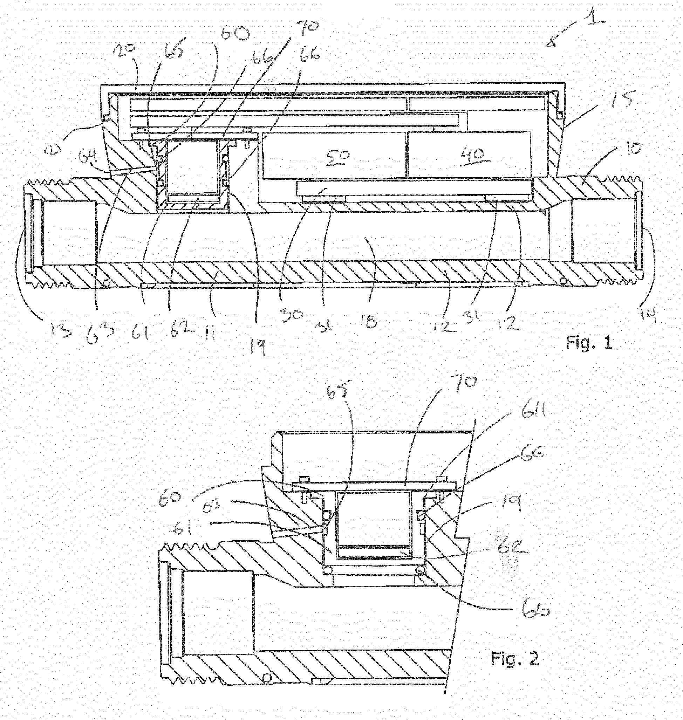

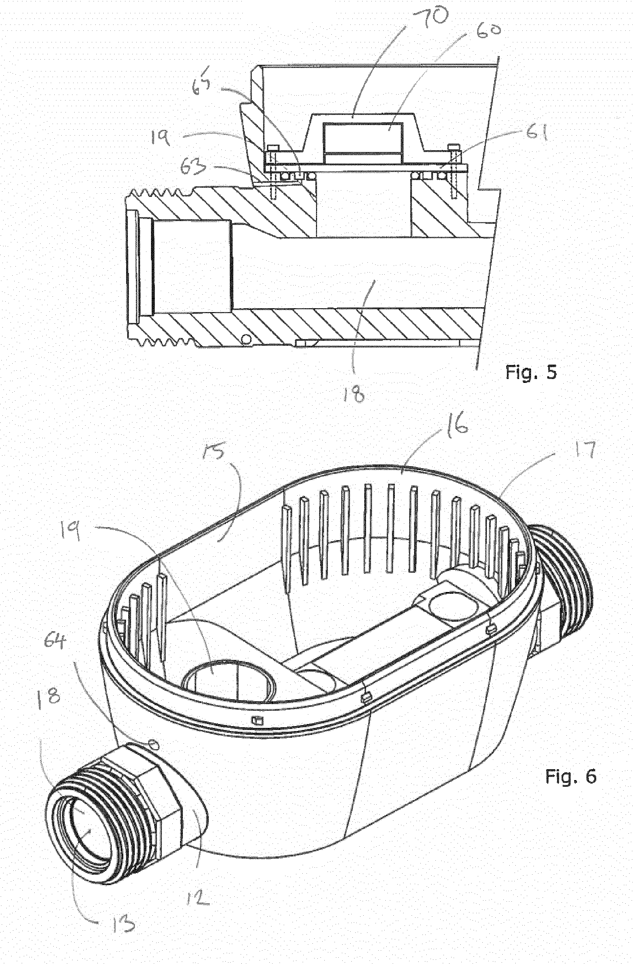

Fig. 1 and 6 show an electronic flow meter comprising a housing 10 formed by a polymer structure. In one embodiment, the polymer structure may be a monolithic structure cast in one piece. The housing includes a flow tube 11 defined by a first wall 12 extending between an inlet 13 and an outlet 14. The housing further includes a compartment integrated with the flow tube and partly defined by a second circumferential wall 15. The second wall forms a compartment opening 16 surrounded by a rim 17. In the shown embodiment, the flow tube extends through the compartment and the first wall separates an inner bore 18 of the flow tube from the compartment. In an alternative embodiment (not shown), the flow tube may be arranged outside the compartment with the first wall separating the inner bore of the flow tube from the compartment. In such embodiment, the first wall would make up part of the second wall or a bottom of the compartment.

The electronic flow meter further comprises a cover 20 configured for being mounted on the housing to provide an enclosed compartment. A sealing ring 21 or other sealing means is provided between the cover and the second wall of the housing to provide a fluid-tight seal.

Inside the compartment, a flow sensor 30 is arranged to measure a flow rate of a fluid flowing through the flow tube. In one embodiment the flow sensor comprises a measurement circuit including two ultrasonic transducers 31 positioned to transmit ultrasonic signals through the first wall. The compartment also houses control electronics 40 operationally connected to the flow sensor, and a self-contained power source 50 for powering the control electronics and the flow sensor.

Additionally, the flow meter comprises a built-in pressure sensor device 60 comprising a sensing element 62 operationally connected to the control electronics. The sensor device is mounted in a sensor bore 19 extending in the polymer structure between the compartment and the inner bore of the flow tube. Depending on the form factor and position of the sensor device, the sensor bore may be shorter or longer and the cross-sectional geometry may vary. In the shown embodiments the sensor bore and sensor device is shown to be substantially circular in cross-section, however other geometries may also be envisaged by the skilled person. Further, the pressure sensor device is shown to be located upstream of or before the flow sensor, i.e. closer to the inlet 13 of the flow tube. However, depending on the pressure intended to be measured, the pressure sensor could also be arranged downstream of the flow sensor. In general, locating the pressure sensor to measure the fluid pressure upstream of the flow sensor would provide a better indication of the pressure in the water-distributing network. Opposite, locating the pressure sensor to measure the fluid pressure downstream would give a better impression of the fluid pressure at the point of consumption, e.g. in the piping network inside a house.

The pressures sensor device 60 as illustrated in Figs. 1-5 comprises a membrane element 61 arrange to shield a sensing element 62 from the fluid flowing in the flow tube. The sensor device also comprises two sealing rings 66 arranged with a distance apart to provide separate sealing barriers between the membrane element and the polymer structure. By arranging the sealing rings with a distance apart, a drain space 65 is created between the sealing barriers. The drain space is provided to collect possible fluid escaping through the sealing barrier arranged closest to the inner bore of the flow tube. By providing a drain channel 63 in fluid communication with the drain space, fluid may be drained from the drain space, thereby preventing the fluid from also escaping past the additional sealing barrier provided by the sealing ring arranged further away for the inner bore of the flow tube. The drain channel extends from the drain space, through the polymer structure, to an outlet 64 provided in an outer face thereof. In one embodiment, a check-valve (not shown) for controlling the flow direction may be provided in the drain channel or at the outlet of the drain channel. The outlet of the drain channel is shown to be arranged above the flow tube; however, the drain channel may also be directed towards an outlet arranged in another position. In addition, several drain channels may be provided for the same drain space or multiple drain spaces may be included.

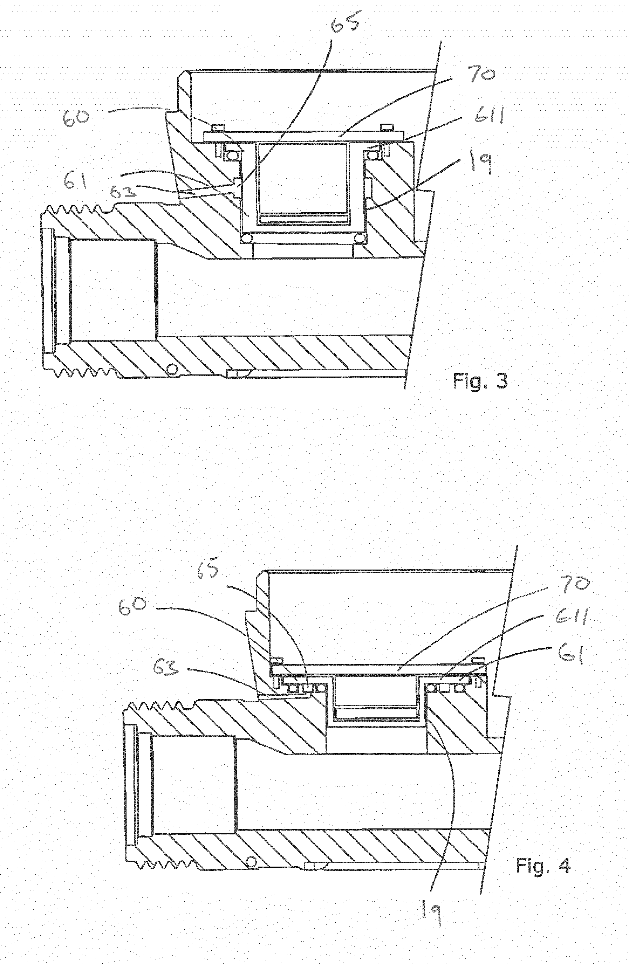

Referring to the embodiments shown in Fig. 1-3, the membrane element is shaped into a structure defining a cavity for housing the sensing element. The structure includes a flange 611 provided around an opening to the cavity. The flange is supported on an abutting face surrounding the sensor bore, whereby the sensor device is prevented from sliding through the sensor bore. Further, the sensor device is fixated by a fixation element 70 fixed by means known to the skilled person, such as screws or pins. The drain space 65 may be arranged to extend along the periphery of the membrane element whereby fluid may be directed to the drain channel. In one embodiment, the drain space may be constituted only by the gap provided between the inner face of the sensor bore and the membrane element. However to facilitate draining, the space may be enlarged by modifying the geometry of the membrane element or the sensor bore. In Fig. 1-2, the diameter of the membrane element has been reduced by providing an indentation in the membrane element. In Fig. 3 an indentation has been provided in the side face of the sensor bore. Fig. 1-3 also illustrate how the sealing ring may be arranged in different positions between the bore and the membrane element as shown in Fig. 1, between a bottom part of the membrane element and a shoulder provided at the bore opening as shown in Fig. 2, or between a flange of the membrane element and polymer structure as shown in Fig. 3. The membrane element may also be provided with indentations for receiving the sealing ring.

As shown in Fig. 4-5, the sealing rings 66 may also be arranged external to the sensor bore. In Fig. 4, both sealing rings are positioned between the flange 611 of the membrane element and the abutting face of the polymer structure outside the sensor bore. This also results in the drain space 65 being positioned outside the sensor bore. Arranging the sealing-rings and the drains space outside the sensor bore reduces production complexity as indentations or grooves for the drain space and/or the sealing rings are provided in the abutting face surrounding the sensor bore.

In Fig. 5, the membrane element is substantially planar and the sensing element is arranged in a cavity provided by the geometry of the fixation element 70. The cavity containing the sensing element may also be provided by the membrane element and the fixation element in combination, e.g. by combining the membrane element shown in Fig. 4 with the fixation element shown in Fig. 5.

Returning to Fig. 1, the control electronics of the electronic flow meter further comprises a signal transmitter configured to wirelessly transmit data packets. The data packets may contain information about the flow rate measured by the flow sensor or the pressure measured by the pressure sensor. Before being included in a data packet, the pressure and flow data may also be pre-processed by the flow meter to derive data values related to fluid consumption or statistical parameters related to flow or pressure measurements, etc.

The control electronics control the functionality of the electronic flow meter including the flow- and pressure sensor. To this end, the sensing element is operationally connected to the control electronics as described above. The sensing element detects changes in the part of the membrane element subject to pressure changes in the fluid inside the flow tube. By determining these changes, the sensing elements output a signal indicative of the pressure or pressure change in the fluid. This signal may be processed by dedicated electronics provided as part of the pressure sensor device or transmitted to the control electronics for processing. The electrical connection between the sensing element and the control electronics may be implemented based on a variety of electrical conducting principles such as by conductors molded into the fixation element or other parts of the sensor device or by inductive coupling. The sensing element itself may be based on different commonly known pressure sensor technologies, such as inductive, capacitive, piezoelectric or strain gauge based technologies. Further, the sensing element may be glued to or otherwise biased towards the membrane element by mechanical means allowing proper operation of the sensing element.

By the above-described embodiments of a flow meter, an electronic flow meter comprising a built-in pressure sensor is achieved, which satisfies requirements regarding impermeability to fluid, in particular water, and realizes efficient and economical data collection.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. In addition, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An electronic flow meter (1) comprising:
- a housing (10) formed by a polymer structure, the housing including a flow tube (11) defined by a first wall (12) and a compartment partly defined by a second circumferential wall (15) forming a compartment opening (16), wherein the first wall separates an inner bore (18) of the flow tube from the compartment;
- a cover (20) configured for sealed engagement with a rim (17) of the second wall surrounding the compartment opening to provide a fluid-tight enclosure; and
- a flow sensor (30) arranged inside the fluid-tight enclosure, configured to measure a flow rate of a fluid flowing through the flow tube, control electronics (40) operationally connected to the flow sensor, and a self-contained power source (50) for powering the control electronics and the flow sensor;
wherein the flow meter further comprises a built-in pressure sensor device (60) arranged in a sensor bore (19) provided in the polymer structure extending from the compartment to the inner bore of the flow tube, wherein the pressure sensor device comprises a sensor housing (61) in the form of a membrane element arranged to seal against the sensor bore to prevent fluid from entering the compartment and wherein a sensing element (62) of the pressure sensor device is arranged in the housing and operationally connected to the control electronics through electrical connections arranged inside the compartment.

2. An electronic flow meter according to claim 1, wherein two sealing elements (66) are arranged with a distance apart to provide separate sealing barriers between the membrane element and the sensor bore, and wherein a drain channel (63) communicating with a drain space (65) provided between the sealing rings, is arranged in a section of the circumferential wall partly defining the sensor bore.

3. An electronic flow meter according to claim 2, wherein the membrane element is provided with one or more indentations, each configured for receiving a sealing ring.

4. An electronic flow meter according to claim 2 or 3, wherein the membrane element is provided with an indentation in an area between the two sealing rings to provide an enlarged drain space in fluid communication with the drain channel.

5. An electronic flow meter according to claim 2 or 3, wherein a drain groove is provided in a face of the sensor bore to provide an enlarged drain space between the sealing rings in fluid communication with the drain channel.

6. An electronic flow meter according to any of the preceding claims, wherein a fixation element is mounted on top of the sensor housing to fixate the sensor housing in the sensor bore.

7. An electronic flow meter according to any of the preceding claims, wherein the sensor housing is arranged to be fixed between an abutting face of the polymer structure provided outside the sensor bore and a fixation element (70), and wherein the drain groove is provided in the abutting face encircling the sensor bore.

8. An electronic flow meter according to claim 7, wherein the sensor housing is provided with a flange (611) surrounding an opening thereof, and wherein the flange is arranged to be fixed between the abutting face and the fixation element.

9. An electronic flow meter according to any of the previous claims, wherein the drain channel is provided with a check-valve for controlling the direction of flow through the drain channel.

10. An electronic flow meter according to any of the previous claims, wherein the drain channel is in fluid communication with the surrounding environment through an outlet (64) provided at an outer face of the polymer structure.

11. An electronic flow meter according to claim 11, wherein the outlet is provided at an outer face of the compartment.
